(19) Europäisches Patentamt
European Patent Office
Office européen des brevets

(11) Veröffentlichungsnummer: **0 554 863 B1**

(12) # EUROPÄISCHE PATENTSCHRIFT

(45) Veröffentlichungstag der Patentschrift: **07.12.94**

(51) Int. Cl.$^5$: **D06M 15/643**, C08G 77/38

(21) Anmeldenummer: **93101725.5**

(22) Anmeldetag: **04.02.93**

(54) **Verfahren zum Imprägnieren von organischen Fasern.**

(30) Priorität: **07.02.92 DE 4203567**

(43) Veröffentlichungstag der Anmeldung:
**11.08.93 Patentblatt 93/32**

(45) Bekanntmachung des Hinweises auf die Patenterteilung:
**07.12.94 Patentblatt 94/49**

(84) Benannte Vertragsstaaten:
**AT BE CH DE ES FR GB IT LI NL**

(56) Entgegenhaltungen:
**EP-A- 0 283 156** **EP-A- 0 431 609**
**EP-A- 0 442 098** **DE-A- 1 419 462**
**FR-A- 1 413 604** **GB-A- 1 005 872**
**US-A- 5 068 380**

(73) Patentinhaber: **WACKER-CHEMIE GMBH**
**Hanns-Seidel-Platz 4**
**D-81737 München (DE)**

(72) Erfinder: **Habereder, Peter, Dr.**
**Oberleiten 22**
**W-8261 Marktl (DE)**
Erfinder: **Kürmeier, Christine**
**Neuhofen 43**
**W-8261 Haiming (DE)**
Erfinder: **Hager, Rudolf, Dr.**
**Beckstrasse 57**
**W-8262 Altötting (DE)**
Erfinder: **Lautenschlager, Hans, Dr.**
**Pappelweg 2**
**W-8261 Haiming (DE)**

**EP 0 554 863 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Imprägnierung von organischen Fasern mit Organosiliciumverbindungen, die mindestens eine Sulfonatgruppe aufweisen.

Es ist bereits bekannt, Organosiliciumverbindungen zur Behandlung von organischen Fasern zu verwenden. Hierzu sei beispielsweise auf L.C. Carvalho, Amaciamento de Texteis, Chimica Textil 1989, 23, Sao Paulo, Brasilien verwiesen. Des weiteren ist aus DE-A 35 03 457 (Wacker-Chemie GmbH; ausgegeben am 7. August 1986) bzw. der entsprechenden US-A-4,720,520 bekannt, organische Fasern mit direkt an Silicium gebundene, kondensationsfähige Gruppen aufweisendem Organopolysiloxan, das zusätzlich zu Diorganosiloxaneinheiten mindestens zwei einwertige SiC-gebundene Reste mit basischem Stickstoff enthält, Organopolysiloxan mit mindestens drei Si-gebundenen Wasserstoffatomen je Molekül und Katalysator zu imprägnieren. Derartige Imprägniermittel sind zwar sehr gute Griffgebungsmittel, rufen jedoch auf dem behandelten Substrat bei höheren Temperaturen im allgemeinen eine Vergilbung hervor. Des weiteren wird in US-A-3,382,095 (Dow Corning Corporation; ausgegeben am 7. Mai 1968) ein Verfahren zur Behandlung von Gewebe mit sulfonatofunktionellen Organosiliciumverbindungen beschrieben.

Gegenstand der vorliegenden Erfindung ist ein Verfahren zur Imprägnierung von organischen Fasern mit Organosiliciumverbindungen aus Einheiten der allgemeinen Formel

$$R_a(R^1O)_bR^2_cSiO_{\frac{4-a-b-c}{2}} \qquad (I),$$

wobei

- R gleich oder verschieden sein kann und einen einwertigen organischen Rest bedeutet,
- $R^1$ gleich oder verschieden sein kann und Wasserstoffatom oder einen einwertigen, organischen Rest bedeutet,
- $R^2$ gleich oder verschieden sein kann und einen Rest $-QSO_3M_v$ bedeutet mit Q gleich zweiwertigem Kohlenwasserstoffrest, M gleich Kation und v gleich dem reziproken Wert der Ladung von M,
- a 0, 1, 2 oder 3 ist,
- b 0, 1, 2 oder 3 ist und
- c 0, 1, 2 oder 3 ist,

mit der Maßgabe, daß die Organosiliciumverbindung pro Molekül mindestens einen Rest $R^2$ aufweist und die Summe aus a, b und c kleiner oder gleich 3 ist.

Bei Rest R handelt es sich bevorzugt um gegebenenfalls substituierte Kohlenwasserstoffreste mit 1 bis 12 Kohlenstoffatom(en), wobei Kohlenwasserstoffreste mit 1 bis 6 Kohlenstoffatom(en), insbesondere der Methylrest, besonders bevorzugt sind.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Bei Rest $R^1$ handelt es sich bevorzugt um Wasserstoffatom und gegebenenfalls substituierte Kohlenwasserstoffreste mit 1 bis 6 Kohlenstoffatom(en), wobei Wasserstoff und Alkylreste mit 1 bis 3 Kohlenstoffatom(en), insbesondere der Methyl-, Ethyl-, und Isopropylrest, besonders bevorzugt sind.

Beispiele für Reste $R^1$ sind die für den Rest R genannten Beispiele mit 1 bis 6 Kohlenstoffatom(en).

Bei Rest Q handelt es sich bevorzugt um zweiwertige Kohlenwasserstoffreste mit 2 bis 10 Kohlenstoffatomen.

Beispiele für Rest Q sind Ethylen-, n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-, Cycloheptylenreste und Methylcyclohexylenreste.

Besonders bevorzugt handelt es sich bei Q um den n-Propylenrest.

a ist vorzugsweise durchschnittlich 1,2 bis 2,2, besonders bevorzugt durchschnittlich 1,6 bis 2,0.

b ist vorzugsweise durchschnittlich 0 bis 0,4, besonders bevorzugt durchschnittlich 0 bis 0,1.

c ist vorzugsweise durchschnittlich 0,005 bis 0,1, besonders bevorzugt durchschnittlich 0,01 bis 0,07.

Beispiele für Rest M sind Kationen der Alkalimetalle, wie die von Lithium, Natrium, Kalium, Rubidium und Cäsium, Kationen der Erdalkalimetalle, wie Magnesium, Calcium und Strontium, sowie Reste der Formel

$^{+}NR^3_4$ (IV),

wobei $R^3$ gleich oder verschieden sein kann und ein Wasserstoffatom oder einen einwertigen organischen Rest oder einen Organosiliciumrest bedeutet, wie beispielsweise Methyl-, Ethyl-, n-Propyl-, iso-Propyl-, n-Butyl-, Isobutyl-, n-Pentyl-, iso-Pentyl-, n-Hexyl-, Benzyl-, 2-Hydroxyethyl- und 3-Hydroxypropylreste sowie 3-Sil(oxan)ylpropylreste oder 3-Sil(oxan)ylpropylaminoethylreste mit beliebig variablem Sil(oxan)ylrest.

Ist $R^3$ ein Siloxanylrest, so ist dieser vorzugsweise ein kovalenter Bestandteil der Organosiliciumverbindung aus Einheiten der Formel (I), das heißt, daß die Organosiliciumverbindung aus Einheiten der Formel (I) zwitterionische Struktur aufweist.

Bevorzugt handelt es sich bei Rest M um Natriumion, Magnesiumion, $NH_4^+$, $NHEt_3^+$, $NHProp_3^+$, $NMe_4^+$, $NBu_4^+$, $NMe_3Benz^+$, $NH_3(C_2H_4OH)^+$, $NH_2(C_2H_4OH)_2^+$, $NH(C_2H_4OH)_3^+$, $NH_3(CH_2)_3Si(OMe)_3^+$, $NH_3(CH_2)_2NH_2(CH_2)_3Si(OMe)_3^{2+}$ und (Poly)siloxane, die mindestens eine Einheit, ausgewählt aus der Gruppe bestehend aus $[NH_3(CH_2)_3SiMe_2O_{1/2}]^+$, $[NH_3(CH_2)_3SiMeO]^+$, $[NH_3(CH_2)_3SiO_{3/2}]^+$, $[MeNH_2(CH_2)_3SiMeO]^+$, $[MeNH_2(CH_2)_3SiO_{3/2}]^+$, $[MeNH_2(CH_2)_3SiMe_2O_{1/2}]^+$, $[c\text{-hex } NH_2(CH_2)_3SiMeO]^+$, $[c\text{-hex } NH_2(CH_2)_3SiO_{3/2}]^+$, $[c\text{-hex } NH_2(CH_2)_3SiMe_2O_{1/2}]^+$, $[NH_3(CH_2)_2NH_2(CH_2)_3SiMe_2O_{1/2}]^{2+}$, $[NH_3(CH_2)_2NH_2(CH_2)_3SiMeO]^{2+}$ und $[NH_3(CH_2)_2NH_2(CH_2)_3SiO_{3/2}]^{2+}$ enthalten, wobei Me gleich Methylrest, Et gleich Ethylrest, Prop gleich Propylrest, Bu gleich Butylrest, c-hex gleich Cyclohexylrest und Benz gleich Benzylrest bedeutet.

Besonders bevorzugt handelt es sich bei M um Natriumion, $NHEt_3^+$, $NH_3(C_2H_4OH)^+$ und (Poly)siloxane, die mindestens eine Einheit, ausgewählt aus der Gruppe bestehend aus $[NH_3(CH_2)_3SiMeO]^+$, $[MeNH_2(CH_2)_3SiMeO]^+$, $[c\text{-hex } NH_2(CH_2)_3SiMeO]^+$ und $[NH_3(CH_2)_2NH_2(CH_2)_3SiMeO]^{2+}$ enthalten, wobei Me gleich Methylrest, Et gleich Ethylrest und c-hex gleich Cyclohexylrest bedeutet.

Bei den im erfindungsgemäßen Verfahren eingesetzten Organosiliciumverbindungen aus Einheiten der Formel (I) handelt es sich vorzugsweise um solche ausgewählt aus der Gruppe bestehend aus Organopolysiloxanen der Formel

$$R^2-[\overset{R}{\underset{R}{|}}\!\!SiO]_m-\overset{R}{\underset{R}{|}}\!\!Si-R^2 \qquad (II),$$

wobei R und $R^2$ gleich oder verschieden sein können und die oben dafür angegebene Bedeutung haben und m eine ganze Zahl von vorzugsweise 20 bis 500, besonders bevorzugt 40 bis 200 ist,
Organopolysiloxanen der Formel

$$(R^1O)_pR_{3-p}Si\ [O\overset{R}{\underset{R}{Si}}]_n\ [O\overset{R}{\underset{R^2}{Si}}]_o\ SiR_{3-p}(OR^1)_p \qquad (III),$$

worin R, $R^1$ und $R^2$ gleich oder verschieden sein können und die oben dafür angegebene Bedeutung haben, n eine ganze Zahl von vorzugsweise 20 bis 1000, besonders bevorzugt 40 bis 400, o eine ganze Zahl von bevorzugt 1 bis 40, besonders bevorzugt 3 bis 20 ist und p 0 oder 1 ist,
sowie Organopolysiloxanen der Formel (II) oder (III), in denen die $[R_2SiO]$-Einheiten ganz oder zum Teil durch $[RSiO_{3/2}]$-, $[R(R^1O)SiO]$-, $[(R^1O)_2SiO]$-, $[(R^1O)SiO_{3/2}]$- und/oder $(SiO_{4/2}]$-Einheiten ersetzt sind bzw. die $[RR^2SiO]$-Einheiten ganz oder zum Teil durch $[(R^1O)R^2SiO]$- und/oder $[R^2SiO_{3/2}]$-Einheiten ersetzt sind, wobei R, $R^1$ und $R^2$ die oben angegebene Bedeutung haben.

Beispiele für die im erfindungsgemäßen Verfahren eingesetzten Organosiliciumverbindungen sind

$^{+}NHEt_3\ ^{-}O_3S(CH_2)_3SiMe_2O[Me_2SiO]_{50}Me_2Si(CH_2)_3SO_3^{-}\ NHEt_3^{+}$,
$^{+}Na\ ^{-}O_3S(CH_2)_3SiMe_2O[Me_2SiO]_{100}Me_2Si(CH_2)_3SO_3^{-}\ Na^{+}$,

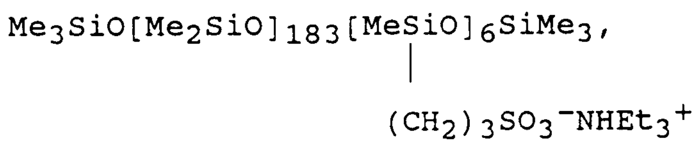

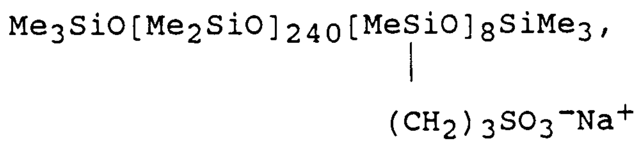

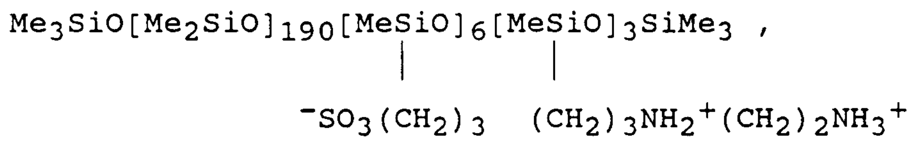

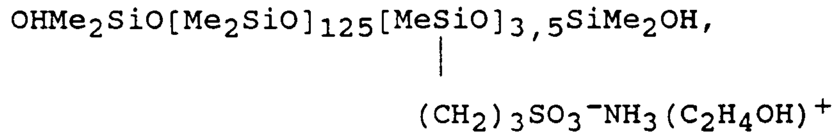

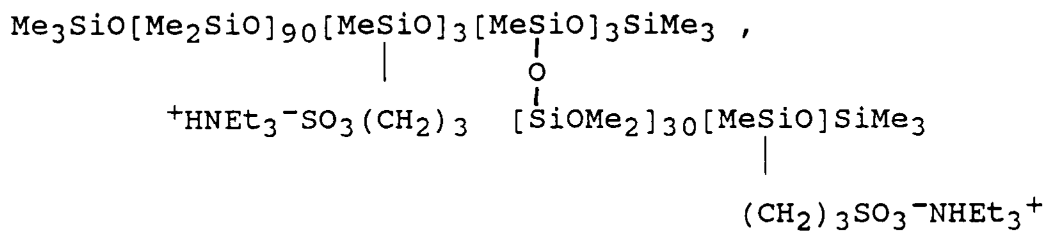

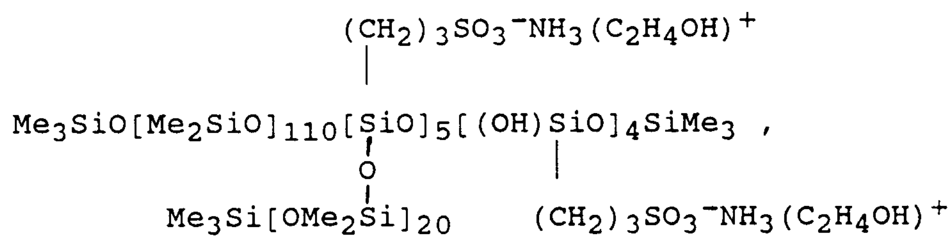

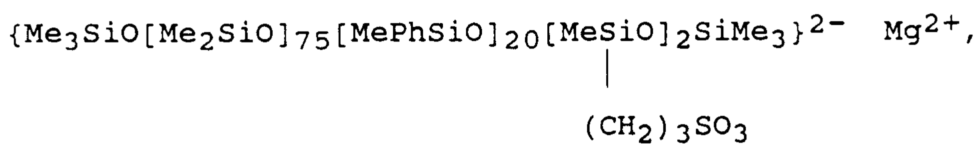

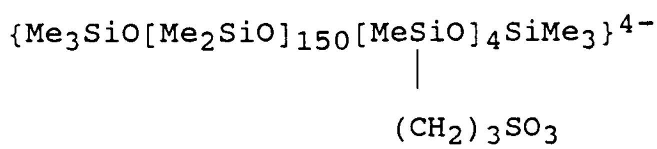

$\{^{+}NH_3(CH_2)_3Me_2SiO[Me_2SiO]_{10}SiMe_2(CH_2)_3NH_3^{+}\}_2$

und

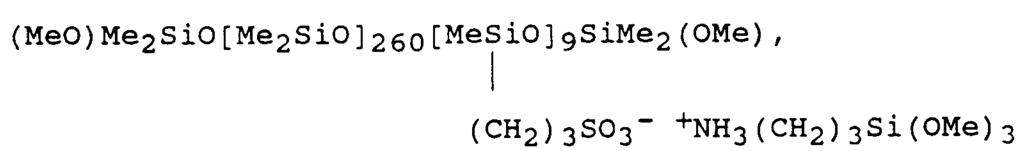

wobei Me gleich Methylrest, Et gleich Ethylrest und Ph gleich Phenylrest bedeutet.

Besonders bevorzugt handelt es sich bei den erfindungsgemäß eingesetzten Organosiliciumverbindungen um

$^{+}NHEt_3\ ^{-}O_3S(CH_2)_3SiMe_2O[Me_2SiO]_{50}Me_2Si(CH_2)_3SO_3^{-}\ NHEt_3^{+}$,

$$Me_3SiO[Me_2SiO]_{183}[MeSiO]_6SiMe_3,$$
$$(CH_2)_3SO_3^-NHEt_3^+$$

$$Me_3SiO[Me_2SiO]_{190}[MeSiO]_6[MeSiO]_3SiMe_3\ ,$$
$$^-SO_3(CH_2)_3 \quad (CH_2)_3NH_2^+(CH_2)_2NH_3^+$$

$$OHMe_2SiO[Me_2SiO]_{125}[MeSiO]_{3,5}SiMe_2OH,$$
$$(CH_2)_3SO_3^-NH_3(C_2H_4OH)^+$$

$$(CH_2)_3SO_3^-NH_3(C_2H_4OH)^+$$
$$Me_3SiO[Me_2SiO]_{110}[SiO]_5[(OH)SiO]_4SiMe_3\ ,$$
$$O$$
$$Me_3Si[OMe_2Si]_{20} \quad (CH_2)_3SO_3^-NH_3(C_2H_4OH)^+$$

Die erfindungsgemäß eingesetzten Organosiliciumverbindungen sind vorzugsweise wasserunlöslich.

Die erfindungsgemäß eingesetzten Organosiliciumverbindungen können nach allen Verfahren hergestellt werden, nach denen auch bisher Organosiliciumverbindungen mit mindestens einer Sulfonatgruppe hergestellt werden können.

Vorzugsweise werden sie nach einem in der deutschen Anmeldung vom 24.10.1991 mit dem Aktenzeichen P 41 35 170.3 (R. Hager; Wacker-Chemie GmbH) beschriebenen Verfahren hergestellt. Danach werden Organosiliciumverbindungen aus Einheiten der allgemeinen Formel (I) durch Umsetzung von Organosiliciumverbindungen aus Einheiten der Formel

$$R^4{}_d(R^5O)_eR^6{}_fSiO_{\frac{4-d-e-f}{2}} \qquad (V),$$

wobei

- $R^4$ gleich oder verschieden sein kann und eine oben für R angegebene Bedeutung hat,
- $R^5$ gleich oder verschieden sein kann und eine oben für $R^1$ angegebene Bedeutung hat,
- $R^6$ gleich oder verschieden sein kann und einen Rest -Q'X bedeutet mit Q' gleich Q und X gleich Halogenatom,
- d 0, 1, 2 oder 3 ist,
- e 0, 1, 2 oder 3 ist und
- f 0, 1, 2 oder 3 ist,

mit der Maßgabe, daß die Organosiliciumverbindung pro Molekül mindestens einen Rest $R^6$ aufweist und die Summe aus d, e und f kleiner oder gleich 4 ist, mit Sulfit in Anwesenheit von Wasser hergestellt.

Beispiel für Halogenatom X ist Chlor, Brom oder Jod, wobei X bevorzugt die Bedeutung von Chloratom hat.

Bevorzugt handelt es sich bei Resten $R^6$ um $-(CH_2)_3Cl$, $-(CH_2)_3Br$, $-(CH_2)_4Cl$, $-(CH_2)_4Br$, $-(CH_2)_2CH(CH_3)Cl$, $-(CH_2)_5Cl$, wobei $-(CH_2)_3Cl$ besonders bevorzugt ist.

Bei den in diesem Verfahren eingesetzten Organosiliciumverbindungen aus Einheiten der Formel (V) handelt es sich vorzugsweise um Silane der allgemeinen Formel

$R^7{}_g(R^8O)_hSiR^9{}_i$ (VI)

und/oder deren Teilhydrolysate, wobei

- $R^7$ gleich oder verschieden sein kann und eine für R oben angegebene Bedeutung hat,
- $R^8$ gleich oder verschieden sein kann und eine für $R^1$ oben angegebene Bedeutung hat,
- $R^9$ gleich oder verschieden sein kann und eine für $R^6$ oben angegebene Bedeutung hat,
- g 0, 1, 2 oder 3, bevorzugt 0, 1 oder 2, besonders bevorzugt 1 oder 2, ist,
- h 1, 2 oder 3, bevorzugt 1 oder 2, besonders bevorzugt 2, ist und
- i 1, 2 oder 3, bevorzugt 1 oder 2, besonders bevorzugt 1, ist,

mit der Maßgabe, daß die Summe aus g + h + i gleich 4 ist.

Beispiele für Silane der Formel (VI) sind $(CH_3)_2(OH)Si(CH_2)_3Cl$, $(CH_3)_2(CH_3O)Si(CH_2)_3Cl$, $(CH_3)_2(C_2H_5O)Si(CH_2)_3Cl$, $(C_2H_5)_2(CH_3O)Si(CH_2)_4Cl$, $CH_3(CH_3O)_2Si(CH_2)_3Cl$,

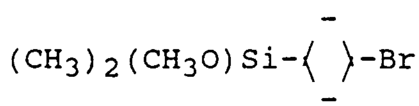

$CH_3(C_2H_5O)_2Si(CH_2)_3Cl$, $CH_2=CH(CH_3O)_2Si(CH_2)_4Cl$, $CH_3(C_3H_7O)_2Si(CH_2)_2CH(CH_3)Br$, $(C_2H_5O)_3Si(CH_2)_4I$, $CH_3(CH_3O)Si[(CH_2)_3Cl]_2$, $(CH_3O)_2Si[(CH_2)_3Cl]_2$, $(CH_3O)_2Si[(CH_2)_4Br]_2$, $CH_3Si[(CH_2)_3I]_3$, $(CH_3O)Si[(CH_2)_3I]_3$, wobei $(CH_3)_2(HO)Si(CH_2)_3Cl$, $(CH_3)_2(CH_3O)Si(CH_2)_3Cl$, $(CH_3)_2(C_2H_5O)Si(CH_2)_3Cl$, $CH_3(CH_3O)Si[(CH_2)_3Cl]_2$, $CH_3(CH_3O)_2Si(CH_2)_3Cl$, $CH_3(C_2H_5O)_2Si(CH_2)_3Cl$, $C_6H_5(CH_3O)_2Si(CH_2)_3Cl$, $C_6H_5(C_2H_5O)_2Si(CH_2)_3Cl$, $(C_2H_5O)_3Si(CH_2)_3Cl$ und $(CH_3O)_3Si(CH_2)_3Cl$ bevorzugt und $(CH_3)_2(CH_3O)Si(CH_2)_3Cl$, $(CH_3)_2(C_2H_5O)Si(CH_2)_3Cl$, $(CH_3)(CH_3O)_2Si(CH_2)_3Cl$ und $(CH_3)(C_2H_5O)_2Si(CH_2)_3Cl$ besonders bevorzugt sind.

Bei den im Verfahren eingesetzten Organosiliciumverbindungen aus Einheiten der Formel (V) kann es sich aber auch um Organo(poly)siloxane handeln, wenn in den Einheiten der Formel (V) die Summe aus d + e + f kleiner oder gleich 3 ist.

Falls es sich bei der eingesetzten Organosiliciumverbindung aus Einheiten der Formel (V) um Organo(poly)siloxane handelt, ist d vorzugsweise durchschnittlich 0,5 bis 2,5, besonders bevorzugt durchschnittlich 0,9 bis 2,1, e vorzugsweise durchschnittlich 0 bis 0,5, besonders bevorzugt durchschnittlich 0 bis 0,3 und f vorzugsweise durchschnittlich 0,1 bis 1,5, besonders bevorzugt durchschnittlich 0,3 bis 1,0.

Beispiele für Organo(poly)siloxane, die in diesem Verfahren eingesetzt werden können, sind lineare Organo(poly)siloxane, wie $O[Me_2Si(CH_2)_3Cl]_2$, $Me[Me_3SiO]_2Si(CH_2)_3Cl$, $Cl(CH_2)_3SiMe_2O[SiMe_2O]_5Me_2Si(CH_2)_3Cl$, $HOMe_2SiO[SiMe_2O]_{10}[MeSi((CH_2)_3Cl)O]_5Me_2SiOH$, $Me_3SiO[SiMe_2O]_7[MeSi((CH_2)_3Cl)O]_2SiMe_3$, $O[Me_2Si(CH_2)_4Cl]_2$, $Me_3SiOSiMe_2(CH_2)_3Cl$, cyclische Organo(poly)siloxane, wie $[OMeSi(CH_2)_3Cl]_{3-8}$, $[OMeSi(CH_2)_4Br]_{3-8}$, $[OMeSi(CH_2)_3Cl]_2[OMe_2Si]_2$, $[O(C_2H_5)Si(CH_2)_4Br]_2(OMe_2Si)_3$ sowie verzweigte Organo(poly)siloxane, wie $[Me_3SiO]_3Si(CH_2)_3Cl$, $\{[Me_3SiO]_2Si(CH_2)_3Cl\}_2O$, wobei $O[Me_2Si(CH_2)_3Cl]_2$, $HOMe_2SiO[SiMe_2O]_{10}[MeSi((CH_2)_3Cl)O]_5Me_2SiOH$ und $[Me_3SiO]_2MeSi(CH_2)_3Cl$ bevorzugt sind und $O[Me_2Si(CH_2)_3Cl]_2$ besonders bevorzugt ist, wobei Me gleich Methylrest ist.

Bei dem im Verfahren eingesetzten Sulfit handelt es sich vorzugsweise um bei 100 °C und 1013 hPa in Wasser zumindest zu 20 Gewichtsprozent lösliche Verbindungen der Formel

$(M'_{v'})_2SO_3$ (VIII),

wobei M' gleich oder verschieden sein kann und eine für M angegebene Bedeutung hat und v'gleich der reziproken Ladung von M'ist.

Beispiele für in diesem Verfahren eingesetztes Sulfit sind $Na_2SO_3$, $(NH_4)_2SO_3$, $K_2SO_3$, $(NMe_4)_2SO_3$, $(NEt_3Benz)_2SO_3$, $(NMe_3H)_2SO_3$, $(NEt_3)_2SO_3$ etc., wobei $Na_2SO_3$, $K_2SO_3$ und $(NH_4)_2SO_3$ bevorzugt sind und $Na_2SO_3$ besonders bevorzugt ist und Me gleich Methylrest, Et gleich Ethylrest und Benz gleich Benzylrest ist.

Bei dem Verfahren wird Sulfit in Mengen von bevorzugt 0,8 Mol bis 1,5 Mol, besonders bevorzugt 0,9 Mol bis 1,1 Mol, insbesondere 1 Mol, jeweils bezogen auf ein Mol Rest X in der eingesetzten Organosiliciumverbindung aus Einheiten der Formel (V), eingesetzt. Ein Mol Sulfit pro Mol Rest X der eingesetzten Organosiliciumverbindung aus Einheiten der Formel (V) ist im allgemeinen völlig ausreichend, um eine homogene Reaktionsmasse und einen vollständigen Umsatz der Reste X zu erzielen. Mit einem Sulfitüberschuß wird jedoch schneller ein vollständiger Umsatz der Reste X erreicht.

Bei dem Verfahren wird Wasser vorzugsweise in Mengen von 50 bis 1000 Gewichtsprozent, besonders bevorzugt 200 bis 700 Gewichtsprozent, jeweils bezogen auf das Gewicht an Organosiliciumverbindung aus Einheiten der Formel (V), eingesetzt.

Zur Beschleunigung der Umsetzung kann bei dem Verfahren ein Katalysator eingesetzt werden. Bei dem Verfahren wird ein Katalysator vorzugsweise dann eingesetzt, wenn als Organosiliciumverbindung aus Einheiten der Formel (V) Organo(poly)siloxan mit überwiegend apolaren organischen Resten eingesetzt wird.

Die so erhaltenen Organosiliciumverbindungen können nach in der Siliciumchemie üblichen Verfahren äquilibriert werden, um so beispielsweise die Anzahl der pro Molekül vorhandenen Sulfonsäuregruppen zu variieren.

Vorzugsweise werden die erfindungsgemäß eingesetzten Organosiliciumverbindungen in Form wäßriger Dispersionen eingesetzt. Sie können jedoch auch in Form von Lösungen in organischen Lösungsmitteln, wie etwa Benzin, Toluol, Xylol, Hexan und halogenierten Kohlenwasserstoffen, eingesetzt werden, was aber nicht bevorzugt ist.

Die Herstellung der erfindungsgemäß eingesetzten Dispersionen kann dabei in für die Herstellung von Organopolysiloxandispersionen bekannter Weise erfolgen. Hierzu sei beispielsweise auf P. Walstra, Formation of Emulsions in "Encyclopädie der technischen Chemie", Band 10, Verlag Chemie 1975 verwiesen. Als Dispergiermittel in diesen Dispersionen können nichtionische und anionische Tenside, wie beispielsweise Fettalkoholpolyglykolether, Alkylarylpolyglykolether, Fettsäureester, Alkylbenzolsulfonate, Fettalkoholsulfonate, Fettalkoholsulfate, Fettsäuresulfonate und Fettsäureestersulfonate verwendet werden, wobei nichtionische Tenside, insbesondere Fettalkoholethoxylate bevorzugt sind.

Des weiteren können zur Herstellung dieser Dispersionen außer Wasser, Tenside und mindestens eine Sulfonatgruppe aufweisender Organosiliciumverbindung aus Einheiten der allgemeinen Formel (I) noch Zusatzstoffe, wie Coemulgatoren, Lösungsvermittler, Konservierungsmittel und Verdickungsmittel, eingesetzt werden.

Beispiele für Verdickungsmittel sind Alginate, Galactomannanether, Xanthangummen, Acrylate und Maleinanhydridcopolymere.

Beispiele für Coemulgatoren bzw. Lösungsvermittler sind Ethylenglycol, Glycerin, aliphatische Alkohole, Benzylalkohol, Polyalkylenoxide sowie ethoxylierte bzw. propoxylierte Derivate der genannten Alkohole.

Beispiele für Konservierungsmittel sind Stearylbenzyldimethylammoniumchlorid, Formaldehyd, Sorbinsäure, Isathiazolinderivate, gegebenenfalls teilhalogenierte Phenole und Kresole sowie deren Salze.

Die erfindungsgemäß eingesetzten Dispersionen enthalten Organosiliciumverbindung mit mindestens einer Sulfonatgruppe aus Einheiten der Formel (I) in Mengen von vorzugsweise 5 bis 60 Gewichtsprozent, besonders bevorzugt von 10 bis 50 Gewichtsprozent, jeweils bezogen auf das Gesamtgewicht der Dispersion. Sie haben einen Festgehalt von vorzugsweise 7 bis 75 Gewichtsprozent, besonders bevorzugt 12 bis 55 Gewichtsprozent, jeweils bezogen auf das Gesamtgewicht der Dispersion, und eine durchschnittliche Teilchengröße von vorzugsweise 5 bis 300 nm, besonders bevorzugt 10 bis 170 nm. Die erfindungsgemäß eingesetzten Dispersionen sind mit Wasser praktisch unbegrenzt mischbar und haben bei Raumtemperatur und dem Druck der umgebenden Atmosphäre eine Lagerstabilität von über 3 Monaten, vorzugsweise von über 6 Monaten.

Die erfindungsgemäßen Dispersionen können als solche oder in Kombination mit weiteren Stoffen, wie sie zur Ausrüstung von textilen Fasern oder Flächengebilden herkömmlicherweise mitverwendet werden können, eingesetzt werden.

Beispiele für derartige weitere Stoffe sind Weichmacher auf Basis bereits bekannter Organopolysiloxane, Fettsäurederivate, Polyethylen, optische Aufheller, Reaktantharze und deren Katalysatoren, wie Melaminharze, Dimethyloldihydroxyethylenharnstoff, $MgCl_2$ und $NaBF_4$.

Diese gegebenenfalls eingesetzten Stoffe können unverdünnt oder in Form von wäßrigen Dispersionen mit der erfindungsgemäßen Dispersion vermischt werden. Die gegebenenfalls eingesetzten weiteren Stoffe können jedoch auch zusammen mit der erfindungsgemäß eingesetzten Organosiliciumverbindung mit mindestens einer Sulfonatgruppe aus Einheiten der Formel (I) dispergiert werden.

Das Auftragen der bei dem erfindungsgemäßen Verfahren verwendeten Stoffe auf die zu imprägnierenden Fasern kann in beliebiger für die Imprägnierung von Fasern geeigneter und vielfach bekannter Weise erfolgen, wie beispielsweise durch Foulardieren, Schaumauftrag, MA-Technik (Minimalauftrags-Technik), Streichen, Gießen, Sprühen, Aufwalzen, Klotzen oder Drucken.

Nach dem erfindungsgemäßen Verfahren können alle organischen Fasern in Form von Fäden, Garnen, Vliesen, Matten, Strängen, gewebten, gewirkten oder gestrickten Textilien sowie getufteten Flächengebilden imprägniert werden, die auch bisher mit Organosiliciumverbindungen imprägniert werden konnten. Beispiele für organische Fasern, die nach dem erfindungsgemäßen Verfahren imprägniert werden können, sind solche aus Keratin, insbesondere Wolle, Polyvinylalkohol, Mischpolymere von Vinylacetat, Baumwolle, Rayon, Hanf, natürliche Seide, Polypropylen, Polyethylen, Polyester, Polyacrylnitril, Polyurethan, Polyamid, Regenerat-Cellulose, Acetat, Triacetat und Gemische aus mindestens zwei solcher Fasern. Wie aus der vorstehenden Aufzählung ersichtlich, können die organischen Fasern natürlicher oder synthetischer Herkunft sein. Die Textilien können auch in Form von Stoffbahnen, Kleidungsstücken oder Teilen von Kleidungsstücken vorliegen.

Bei dem erfindungsgemäßen Verfahren handelt es sich bei den organischen Fasern vorzugsweise um Wolle, Baumwolle, Polyester, Polyamid, Polyacrylnitril sowie deren Mischungen.

Vorzugsweise wird bei dem erfindungsgemäßen Verfahren Organosiliciumverbindung mit mindestens einer Sulfonatgruppe in Mengen von 0,1 bis 5 Gewichtsprozent, besonders bevorzugt 0,3 bis 1,5 Gewichtsprozent, jeweils bezogen auf das Gesamtgewicht an zu imprägnierender organischer Faser, aufgetragen.

Die nach dem erfindungsgemäßen Verfahren imprägnierten Fasern haben einen ausgezeichneten Weichgriff, eine sehr gute Saugfähigkeit Wasser gegenüber sowie antistatische Eigenschaften. Die nach dem erfindungsgemäßen Verfahren imprägnierten Fasern haben darüber hinaus den Vorteil, daß selbst bei Temperaturen von 150 bis 180 °C keine Vergilbung auftritt.

In den nachstehend beschriebenen Beispielen beziehen sich alle Viskositätsangaben auf eine Temperatur von 23 °C. Unter "Normklima" soll im Folgenden 65 % relative Luftfeuchtigkeit und eine Temperatur von 22 °C verstanden werden. Sofern nicht anders angegeben, werden die nachstehenden Beispiele bei einem Druck der umgebenden Atmosphäre, also etwa bei 1000 hPa, und bei Raumtemperatur, also bei etwa 22 °C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Der in den Beispielen genannte Tropftest wird wie folgt durchgeführt:

Der textile Proband wird in eine Spannvorrichtung eingesetzt und mittels einer Pipette mit einem Tropfen destilliertem Wasser beaufschlagt. Sobald der Tropfen auf der Textiloberfläche auftrifft, wird die Zeitmessung gestartet. Man beobachtet die glänzende Oberfläche des einsinkenden Tropfens so lange, bis der Glanz verschwunden ist und stoppt die Zeitmessung.

Hierzu sei auch auf Tegewa Tropftest; Melliand Textilberichte 1987, 581 verwiesen.

Es werden die folgenden Abkürzungen verwendet:

Me: Methylrest
Et: Ethylrest

**Beispiel 1**

A

100 g 3-Chlorpropyldimethoxymethylsilan werden innerhalb von 8 Stunden kontinuierlich unter heftigem Rühren zu einer siedenen Lösung von 75,9 g Natriumsulfit in 500 ml Wasser zudosiert. Anschließend wird noch weitere 2 Stunden unter Rückfluß gerührt. Beim Abkühlen auf Raumtemperatur scheidet sich auf dem Wasser eine dünne organische Phase ab, die hauptsächlich aus methoxyterminierten Poly(3-chlorpropylmethyl)siloxanen besteht. Diese nicht wassermischbare Schicht (3,1 g) wird im Scheidetrichter abgetrennt und die Wasserphase bei 65 °C im Wasserstrahlvakuum auf die Hälfte ihres ursprünglichen Volumens eingeengt. Bei 0 °C wird dann in die wäßrige Lösung bis zur Sättigung HCl-Gas eingeleitet, das ausgefallene Salz wird abfiltriert und das Filtrat zunächst im Wasserstrahlvakuum eingeengt, dann bei 80 °C und einem Druck von 10 Pa ausgeheizt. Dabei bleiben 89,5 g (89,7 % bezogen auf eingesetztes Silan) klares, nahezu farbloses, hochviskoses Öl zurück, das zu ca. 98% aus Einheiten der Formel $OSiMe(CH_2)_3SO_3H$ besteht. Dieser Rückstand wird zusammen mit 1160 g Polydimethylsiloxan der Formel $HO[Me_2SiO]_{70}H$und 13,1 g Hexamethyldisiloxan in 1 l Ethylenglykoldimethylether, dem 15 ml Wasser zugesetzt wurden, gelöst und 5 Stunden bei 80 °C gerührt. Anschließend wird die Reaktionsmischung auf 50 °C abgekühlt und mit 55 g Triethylamin versetzt.

Nach Entfernen der flüchtigen Bestandteile bei 60 °C und einem Druck von 20 Pa werden 1228 g eines sulfonatfunktionellen Organopolysiloxans der Formel

$$Me_3SiO\ [Me_2SiO]_{183}\ [MeSiO]_6\ SiMe_3$$

$$\qquad\qquad\qquad\qquad |$$

$$\qquad\qquad\qquad\qquad (CH_2)_3SO_3^{-}NHEt_3^{+}$$

mit einer Viskosität von 4750 $mm^2/s$ erhalten.

In einem 800 ml Becherglas werden 10 Teile eines ethoxylierten Talgfettalkoholes x 25 Ethylenoxid (käuflich erhältlich unter der Bezeichnung Genapol T 250 bei der Hoechst AG), 10 Teile Wasser und 3 Teile Diethylenglycolmonobutylether mit Hilfe eines Schnellrührers (Ultra-Turrax) vermengt. Zu dieser Mischung werden unter Rühren portionsweise 25 Teile des oben unter A beschriebenen sulfonatofunktionellen Organopolysiloxans gegeben und vermengt. Im Anschluß daran wird die Mischung portionsweise mit 52 Teilen entmineralisiertem Wasser versetzt und eine Emulsion bereitet. Diese Emulsion wird mit 0,1 Teilen Stearylbenzyldimethylammoniumchlorid konserviert. Die so erhaltene Emulsion hat eine mittlere Teilchengröße von 132 nm, einen Gehalt an sulfonatofunktionellem Organopolysiloxan von 25 % und einen Festgehalt von 38 %, jeweils bezogen auf das Gesamtgewicht der Emulsion.

**Beispiel 2**

4 Teile eines ethoxylierten Isotridecylalkohols mit 6 Ethoxyeinheiten, 6 Teile eines ethoxilierten Isotridecylalkohols mit 8 Ethoxyeinheiten, 3 Teile Diethylenglycolmonobutylether und 10 Teile Wasser werden in einem Becherglas vermischt und portionsweise mit 25 Teilen des in Beispiel 1 unter A beschriebenen sulfonatofunktionellen Organopolysiloxans versetzt. Im Anschluß daran werden weitere 52 Teile Wasser zuemulgiert und mit 0,1 Teilen Formalin (30 %ig) konserviert. Die so erhaltene Microemulsion ist wasserklar. Sie hat eine mittlere Teilchengröße von 10 nm, einen Gehalt an sulfonatofunktionellem Organospolysiloxan von 25 % und einen Festgehalt von 38 %, jeweils bezogen auf das Gesamtgewicht der Emulsion.

**Beispiel 3**

A

25 g 3-Chlorpropyldimethylmethoxysilan (0,15 mol) werden innerhalb von 2 Stunden kontinuierlich unter intensivem Rühren zu einer siedenden Lösung von 20,7 g Natriumsulfit in 125 ml Wasser zudosiert. Anschließend wird noch weitere 12 Stunden unter Rückfluß gerührt. Nach Abkühlung auf Raumtemperatur wird die leicht trübe Lösung mit 50 ml Diethylether versetzt, die klare Wasserphase abgetrennt und im Wasserstrahlvakuum eingedampft. Der zurückbleibende weiße Feststoff wird bei 0 ° C in 40 ml konzentrierter Salzsäure (37%ig in Wasser) und 50 ml Ethanol aufgenommen, die Lösung filtriert und im Ölpumpenvakuum (20 Pa) bei 65 ° C eingedampft. Das so erhaltene hellgelbe Öl kristallisiert beim Abkühlen auf Raumtemperatur. Der Feststoff, der bei 63 ° C schmilzt, ist ein cyclisches Silan der Formel:

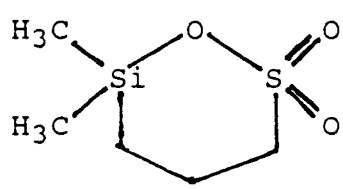

Die Ausbeute beträgt 25,4 g oder 94% bezogen auf das eingesetzte Silan.

Der Feststoff wird zusammen mit 272 g Siloxan der Formel $HO[Me_2SiO]_{15}H$ in einem Gemisch aus 250 ml Ethylenglykoldimethylether und 2 ml Wasser gelöst und die Lösung 4,5 Stunden bei 80 ° C gerührt. Nach Abkühlung auf Raumtemperatur werden innerhalb von 15 min unter Rühren 20 g Triethylamin zudosiert. Zur Beseitigung der bei der Aminzugabe auftretenden gelben Färbung wird das Reaktionsgemisch noch 2 Stunden mit 10 g Aktivkohle bei Raumtemperatur gerührt und anschließend die Aktivkohle wieder abfiltriert.

Nach Entfernen der flüchtigen Bestandteile bei 65°C und einem Druck von 20 Pa werden als klares, farbloses Öl 293 g eines sulfonatfunktionellen Organopolysiloxans der Formel

$NHEt_3{}^{+-}O_3S(CH_2)_3SiMe_2O[Me_2SiO]_{50}\ Me_2Si(CH_2)_3SO_3{}^{-}NHEt_3{}^{+}$

mit einer Viskosität von 1430 mm²/s erhalten.

Eine Mischung aus 10 Teilen Triethanolaminsalz eines $C_{12}/C_{14}$ Oxoalkoholsulfonats 60 %ig in Wasser (käuflich erhältlich unter der Bezeichnung "Genapol CRT 40" bei der Hoechst AG), und 6 Teilen Wasser wird portionsweise mit 25 Teilen des oben unter A beschriebenen sulfonatofunktionellen Organopolysiloxans versetzt und anschließend mit 59 Teilen Wasser verdünnt und mit Formalin (30 %ig) konserviert. Die so erhaltene dünnflüssige Emulsion hat eine mittlere Teilchengröße von 162 nm, einen Gehalt an sulfonatofunktionellem Organospolysiloxan von 25 % und einen Festgehalt von 35 %, jeweils bezogen auf das Gesamtgewicht der Emulsion.

**Beispiel 4**

600 g ethoxyliertes Trimethylnonanol mit 6 Ethoxyeinheiten (käuflich erhältlich unter der Bezeichnung "TMN6" bei Union Carbide Corp.) werden mit 600 ml demineralisiertem Wasser und 600 g Diethylenglycolmonobutylether mit Hilfe eines Schnellrührers (Dispax) vermischt und portionsweise unter intensivem Rühren mit 2500 g des in Beispiel 3 unter A beschriebenen sulfonatofunktionellen Organopolysiloxans vermischt. Im Anschluß daran wird mit 5,7 l Wasser verdünnt und durch intensives Rühren eine Emulsion bereitet. Die so erhaltene klare Microemulsion hat eine mittlere Teilchengröße von kleiner 10 nm, einen Gehalt an sulfonatofunktionellem Organospolysiloxan von 25 % und einen Festgehalt von 37 %, jeweils bezogen auf das Gesamtgewicht der Emulsion.

**Beispiel 5**

Die Emulsionen gemäß den Beispielen 1 bis 4 sowie zum Vergleich eine Emulsion (V1) eines $\alpha,\omega$-(Trimethylsilyl)dimethylpolysiloxans mit einer Viskosität von 5000 mm²/s (Gehalt an $\alpha,\omega$-(Trimethylsilyl)-dimethylpolysiloxan: 50 %; Feststoffgehalt: 55 %) und eine Emulsion (V2) eines aminofunktionellen Dimethylpolysiloxans der Aminzahl 0,3, der Viskosität 1000 mm²/s und des Strukturelements Si-$C_3H_6$-NH-$C_2H_4$-$NH_2$ (Gehalt an aminofunktionellem Siloxan: 35 %; Feststoffgehalt: 41 %) werden mit Wasser zu einer gebrauchsfertigen Behandlungsflotte verdünnt. Die jeweilige Ansatzkonzentration sowie der Gehalt an Organopolysiloxan der jeweiligen verdünnten Emulsion sind in Tabelle 1 angegeben. Das unten unter a) bis e) aufgeführte Gewebe wird jeweils mit diesen verdünnten Emulsionen am Foulard ausgerüstet, 5 Minuten bei 150°C getrocknet und nach 24 Stunden Lagerung bei Normklima auf Griff sowie mittels Tropftest auf Saugfähigkeit und Hydrophilie untersucht.

Beim Gewebe a) wird mittels eines geeigneten Meßgeräts (Minolta Chroma Meter CR 200) die Vergilbung gemessen. Diese Messung erfolgt mit Lichtart D 65 durch Messung des +b-Wertes im L*a*b Farbmeßsystems. Hierbei zeigt der +b-Wert die zunehmende Abweichung vom Unbuntpunkt dergestalt an, daß ein höherer +b-Wert stärkere und ein geringerer +b-Wert leichtere Vergilbung bedeutet. Die Messungen an Gewebe a) sind aus jeweils 3 Einzelwerten gemittelt.

Zum Vergleich werden Gewebeproben vom Typ a), b) und c) schließlich nur mit Wasser behandelt (V3) und der Griff, die Saugfähigkeit bzw. Hydrophilie sowie der +b-Wert wie oben beschrieben bestimmt.

Die Untersuchungsergebnisse sind in Tabelle 1 aufgeführt.

**Gewebe:**

a) 100 % Baumwoll-Webware, gebleicht, ungefärbt
Gewicht: 112 g/m²
Flottenaufnahme am Foulard, bezogen auf das Gewicht der unbehandelten Ware: 77 %
b) Polyester-Baumwollmischgewebe, Gewichtsverhältnis von Polyester zu Baumwolle von 65 : 35, gefärbt
Gewicht: 220 g/m²
Flottenaufnahme am Foulard, bezogen auf das Gewicht des unbehandelten Gewebes: 65 %
c) Baumwoll-Frottierware, gebleicht, ungefärbt
Gewicht: 290 g/m²
Flottenaufnahme am Foulard, bezogen auf das Gewicht der unbehandelten Ware: 100 %

d) Polyamid-Filamentgewebe, gefärbt
Gewicht: 65 g/m²
Flottenaufnahme am Foulard, bezogen auf das Gewicht des unbehandelten Gewebes: 60 %
e) 100 % Wolle, gefärbt
Gewicht: 144 g/m²
Flottenaufnahme am Foulard, bezogen auf das Gewicht der unbehandelten Wolle: 67 %

Tabelle 1

| Emulsion | | V1 | V2 | Beispiel | | | | V3 |
|---|---|---|---|---|---|---|---|---|
| | | | | 1 | 2 | 3 | 4 | |
| Ansatzkonzentration [g/l][1] | | 15,0 | 21,4 | 30,0 | 30,0 | 30,0 | 30,0 | - |
| Gehalt an Ornopolysiloxan in [g/l][2] | | 7,5 | 7,5 | 7,5 | 7,5 | 7,5 | 7,5 | - |
| Griff auf Gewebe | a) b) c) d) e) | rauh stumpf | glatt weich | weich, füllig glatt | | | | rauh |
| Tropfeneinsinkzeit auf Gewebe | b) | 16s | 153s | 3s | 3s | 7s | 5s | 3s |
| | c) | 25s | 140s | 4s | 2s | 1s | 2s | 2s |
| + b-Wert auf Gewebe a) | | 2,84 | 3,61 | 2,67 | 2,62 | 2,25 | 2,34 | 2,62 |

1) Ansatzkonzentration bedeutet Menge an eingesetzter Emulsion bezogen auf das Gesamtvolumen der Verdünnung
2) Der Gehalt an Organopolysiloxan ist bezogen auf das Gesamtvolumen der Verdünnung

Die mit den erfindungsgemäßen Emulsionen gemäß Beispiel 1 bis 4 ausgerüsteten Gewebe zeigen einen ausgezeichneten Griff. Die mit aminofunktionellem Siloxan (Emulsion V2) behandelten Gewebe zeigen einen ähnlich guten Griff, während die mit Polydimethylsiloxan (Emulsion V1) ausgerüsteten Gewebe im Griff schlecht zu beurteilen sind. Im Kriterium Saugfähigkeit sind die mit den Emulsionen gemäß Beispiel 1 bis 4 behandelten Geweben den mit den Vergleichsemulsionen V1 und V2 deutlich überlegen.

Die mit den erfindungsgemäßen Emulsionen gemäß Beispiel 1 bis 4 ausgerüsteten Gewebe vom Typ a) zeigen gegenüber dem Blindwert mit Wasser (V3) keine Vergilbung. Die Ausrüstung mit aminofunktionellem Organopolysiloxan (V2) führt hingegen zu einer deutlichen Vergilbung.

**Beispiel 6**

Die Emulsionen gemäß den Beispielen 1 bis 4 sowie zum Vergleich die in Beispiel 5 beschriebenen Emulsionen (V1) und (V2) und wasserlösliches Siliconpolyoxyalkylencopolymer mit einem Anteil von Methylsiloxan von 10 Gewichtsprozent und einem Glykolanteil von 90 Gewichtsprozent und einer Viskosität- von 1000 cSt (100%ig, käuflich erhältlich unter der Bezeichnung "VP 1661" bei der Wacker-Chemie GmbH) (V4) werden mit Wasser zu einer gebrauchsfertigen Behandlungsflotte verdünnt. Die jeweilige Ansatzkonzentration sowie der Gehalt an Organopolysiloxan der jeweiligen verdünnten Emulsion bzw. des Copolymers sind in Tabelle 2 angegeben. Webware aus 100 % Polyester mit einem Flächengewicht von 75 g/m² wird mit diesen Verdünnungen ausgerüstet, wobei die Flottenaufnahme am Foulard, bezogen auf das Gewicht der unbehandelten Ware, 84 % ist. Anschließend wird die so ausgerüstete Ware 72 Stunden bei 30 % relativer Luftfeuchtigkeit und Raumtemperatur klimatisiert und an einem Eltex EMF 20-Gerät zur Bestimmung der elektrostatischen Eigenschaften vermessen. Dabei wird eine quadratische, vorher entladene Warenprobe (20 x 20 cm) mit 7,5 kV aufgeladen. Anschließend wird die Halbwertszeit der Entladung gemessen. Die in Tabelle 2 angegebenen Meßwerte sind aus jeweils 3 Einzelwerten gemittelt.

Tabelle 2

| Emulsion[3] | V1 | V2 | Beispiel | | | | V4 |
|---|---|---|---|---|---|---|---|
| | | | 1 | 2 | 3 | 4 | |
| Ansatzkonzentration [g/l][1] | 15,0 | 21,4 | 30,0 | 30,0 | 30,0 | 30,0 | 7,5 |
| Gehalt an Ornopolysiloxan in [g/l][2] | 7,5 | 7,5 | 7,5 | 7,5 | 7,5 | 7,5 | 7,5 |
| Halbwertszeit der Entladung [s] | >200 | 60 | 0,9 | 0,1 | 0,1 | 2,0 | 0,7 |

1) Ansatzkonzentration bedeutet Menge an eingesetzter Emulsion bzw. Copolymer bezogen auf das Gesamtvolumen der Verdünnung
2) Der Gehalt an Organopolysiloxan ist bezogen auf das Gesamtvolumen der Verdünnung
3) Im Fall V4 handelt es sich nicht um eine Emulsion, sondern um das pure Copolymere.

Die mit den erfindungsgemäßen Emulsionen gemäß Beispiel 1 bis 4 ausgerüsteten Polyesterproben zeigen eine hervorragende Antistatik. Die Halbwertszeiten sind wesentlich besser als bei den mit aminofunktionellem Siloxan (Emulsion V2) bzw. mit Polydimethylsiloxan (Emulsion V1) ausgerüsteten Gewebe. Die mit den Emulsionen aus Beispiel 1 bis 4 erzielten Halbwertszeiten sind jedoch vergleichbar mit der Halbwertszeit der mit Siliconoxyalkylencopolymer ausgerüsteten Ware. Das Siliconoxyalkylencopolymer hat jedoch im Gegensatz zu den erfindungsgemäßen Sulfonatosiloxanen keine weichmachenden Eigenschaften und verleiht der ausgerüsteten Ware einen unangenehm strohigen, stumpfen Griff.

**Beispiel 7**

Um sicherzustellen, daß das positive Ergebnis von Beispiel 6 nicht durch die in den Emulsionen jeweils verwendeten Emulgatoren verursacht werden, wird die in Beispiel 6 beschriebene Polyester-Webware mit Siliconlösungen behandelt. Dazu wurden die folgenden Siloxane in Benzin gelöst und in Lösung appliziert, wobei die Flottenaufnahme 84 %, bezogen auf das Gewicht des Textils beträgt. Nach Verdunsten des Lösungsmittels wurden die elektrostatischen Eigenschaften wie in Beispiel 6 beschrieben gemessen:

- $\alpha,\omega$-(Trimethylsilyl)dimethylpolysiloxan mit einer Viskosität von 5000 $mm^2/s$ (PDMS-Öl)
- Aminofunktionelles Dimethylpolysiloxan der Aminzahl 0,3, der Viskosität von 1000 $mm^2/s$ und des Strukturelements $Si-C_3H_6-NH-C_2H_4-NH_2$ (Amin-Öl)
- Sulfonatfunktionelles Organopolysiloxan, dessen Herstellung in Beispiel 1 unter A beschrieben ist (Sulfonatoöl)
- Sulfonatfunktionelles Organopolysiloxan, dessen Herstellung in Beispiel 2 unter A beschrieben ist (Sulfonato-Öl)

Die Konzentrationen der jeweiligen Siloxanlösungen sowie die ermittelten Halbwertszeiten finden sich in Tabelle 3.

Tabelle 3

| | PDMS-Öl | Aminöl | Sulfonatoöl aus Beispiel | |
|---|---|---|---|---|
| | | | 1 | 2 |
| Konzentration [g/l] | 10 | 10 | 10 | 10 |
| Entladungshalbwertszeit | >300 s | >300 s | 3 s | 3 s |

**Beispiel 8**

In der textilen Praxis werden Weichmacher häufig nicht alleine, sondern als Bestandteil einer Appreturrezeptur eingesetzt. Zur Pflegeleicht-Ausrüstung von Baumwolle und Baumwollmischgeweben werden in der Regel sog. Reaktantharze zur Baumwollvernetzung eingesetzt, die sich chemisch als methylolierte Melamine, vorzugsweise aber als Derivate des Dimethyloldihydroxyethylenharnstoffes, beschreiben lassen. Moderne formaldehydarme Vertreter dieser Klasse sind verethert und bedürfen daher zur Reaktion einer

verschärften Katalyse. Zur Pflegeleicht-Ausrüstung wird eine Hochveredelungsflotte nach folgender Rezeptur bereitet:
Eine Mischung aus
60 g Dimethyloldihydroxyethylenharnstoffharz (käuflich erhältlich unter der Bezeichnung "Arcofix NDS" conc. bei der Hoechst AG),
12 g Magnesiumchlorid x 6 $H_2O$,
0,4 g Natriumtetrafluorborat und
x g Weichmacheremulsion bzw. wasserlösliches Siliconpolyoxyalkylencopolymer
wird mit Wasser auf ein Volumen von einem Liter aufgefüllt.

Als x g Weichmacheremulsion wird so viel der Emulsionen gemäß Beispiel 1 sowie zum Vergleich der in Beispiel 5 beschriebenen Emulsionen (V1) und (V2) und das in Beispiel 6 näher beschriebene Siliconpolyoxyalkylencopolymer (V4) eingesetzt, daß der in Tabelle 4 angegebene Gehalt an Organopolysiloxan erzielt wird. Als Vergleich (V5) wird eine Rezeptur ohne Weichmacher, also mit x gleich 0, hergestellt. Die einzelnen Komponenten der Rezeptur sind miteinander verträglich. Die einzelnen Flotten zeigen bei einer Lagerung von mehr als drei Tagen keine Veränderungen. Die in Beispiel 5 unter a) und b) beschriebenen Gewebe werden mit den so erhaltenen Flotten wie in Beispiel 5 beschrieben am Foulard ausgerüstet. Nach 24 Stunden Lagerung bei Normklima werden die behandelten Proben mittels Tropftest auf Saugfähigkeit und Hydrophilie untersucht.

Beim Gewebe a) wird mittels eines geeigneten Meßgeräts (Minolta Chroma Meter CR 200) die Vergilbung gemessen. Diese Messung erfolgt mit Lichtart D 65 durch Messung des +b-Wertes im L*a*b Farbmeßsystem. Hierbei zeigt der +b-Wert die zunehmende Abweichung vom Unbuntpunkt dergestalt an, daß ein höherer +b-Wert stärkere und ein geringerer +b-Wert leichtere Vergilbung bedeutet. Die Messungen an Gewebe a) sind aus jeweils 3 Einzelwerten gemittelt.

Die Untersuchungsergebnisse sind in Tabelle 4 aufgeführt.

Tabelle 4

| Emulsion[4] | | V1 | V2 | V4 | V5 | Beispiel 1 |
|---|---|---|---|---|---|---|
| Ansatzkonzentration [g/l][1] | | 15,0 | 21,4 | 7,5 | - | 30,0 |
| Gehalt an Ornopolysiloxan in [g/l][2] | | 7,5 | 7,5 | 7,5 | - | 7,5 |
| Tropfeneinsinkzeit auf Gewebe | a) | 8s | 150s | 2s | 2s | 4s |
| | b) | 4s | 91s | 3s | 2s | 5s |
| L-Wert | | 95,78 | 95,79 | 95,93 | 96,50 | 95,89 |
| -a-Wert | | 0,60 | 0,70 | 0,61 | 0,66 | 0,65 |
| +b-Wert | | 3,06 | 3,54 | 3,12 | 2,93 | 3,14 |

1) Ansatzkonzentration bedeutet Menge an eingesetzter Emulsion bzw. Copolymer bezogen auf das Gesamtvolumen der Verdünnung
2) Der Gehalt an Organopolysiloxan ist bezogen auf das Gesamtvolumen der Verdünnung
4) Im Fall (V4) handelt es sich nicht um eine Emulsion sondern um das pure Copolymer und im Fall (V5) wird keine Emulsion eingesetzt.

Die geringe Vergilbungstendenz und die gute Hydrophilie der Ausrüstung mit der erfindungsgemäßen Emulsion gemäß Beispiel 1 im Vergleich mit aminofunktionellem Siloxan (Emulsion V2) bleibt auch in der Kombinationsrezeptur erhalten.

## Patentansprüche

1. Verfahren zur Imprägnierung von organischen Fasern mit Organosiliciumverbindungen aus Einheiten der allgemeinen Formel

$$R_a(R^1O)_bR^2_cSiO_{\frac{4-a-b-c}{2}} \quad (I),$$

wobei

R gleich oder verschieden sein kann und einen einwertigen organischen Rest bedeutet,

$R^1$ gleich oder verschieden sein kann und Wasserstoffatom oder einen einwertigen, organischen Rest bedeutet,

$R^2$ gleich oder verschieden sein kann und einen Rest $QSO_3M_v$ bedeutet mit Q gleich zweiwertigem Kohlenwasserstoffrest, M gleich Kation und v gleich dem reziproken Wert der Ladung von M,

a 0, 1, 2 oder 3 ist,

b 0, 1, 2 oder 3 ist und

c 0, 1, 2 oder 3 ist,

mit der Maßgabe, daß die Organosiliciumverbindung pro Molekül mindestens einen Rest $R^2$ aufweist und die Summe aus a, b und c kleiner oder gleich 3 ist.

**2.** Verfahren nach Anspruch 1, dadurch gekennzeichnet, daß als Organosiliciumverbindungen aus Einheiten der Formel (I) solche ausgewählt aus der Gruppe bestehend aus Organopolysiloxanen der Formel

$$R^2-[SiR_2O]_m-SiR_2-R^2 \quad (II),$$

wobei

R gleich oder verschieden sein kann und einen einwertigen organischen Rest bedeutet,

$R^2$ gleich oder verschieden sein kann und einen Rest $-QSO_3M_v$ bedeutet mit Q gleich zweiwertigem Kohlenwasserstoffrest, M gleich Kation und v gleich dem reziproken Wert der Ladung von M und

m eine ganze Zahl von 20 bis 500 ist,

Organopolysiloxanen der Formel

$$(R^1O)_pR_{3-p}Si\ [OSiR_2]_n\ [OSiRR^2]_o\ SiR_{3-p}(OR^1)_p \quad (III),$$

wobei

R gleich oder verschieden sein kann und einen einwertigen organischen Rest bedeutet,

$R^1$ gleich oder verschieden sein kann und Wasserstoffatom oder einen einwertigen, organischen Rest bedeutet,

$R^2$ gleich oder verschieden sein kann und einen Rest $-QSO_3M_v$ bedeutet mit Q gleich zweiwertigem Kohlenwasserstoffrest, M gleich Kation und v gleich dem reziproken Wert der Ladung von M,

n eine ganze Zahl von 20 bis 1000,

o eine ganze Zahl von 1 bis 40 und

p 0 oder 1 ist,

sowie Organopolysiloxanen der Formel (II) oder (III), in denen die $[R_2SiO]$-Einheiten ganz oder zum Teil durch $[RSiO_{3/2}]$-, $[R(R^1O)SiO]$-, $[(R^1O)_2SiO]$-, $[(R^1O)SiO_{3/2}]$-und/oder $[SiO_{4/2}]$-Einheiten ersetzt sind bzw. die $[RR^2SiO]$-Einheiten ganz oder zum Teil durch $[(R^1O)R^2SiO]$- und/oder $[R^2SiO_{3/2}]$-Einheiten ersetzt

sind, wobei R, $R^1$ und $R^2$ die oben angegebene Bedeutung haben, eingesetzt werden.

3. Verfahren nach Anspruch 1 oder 2, dadurch gekennzeichnet, daß Q n-Propylenrest bedeutet.

4. Verfahren nach einem oder mehreren der Ansprüche 1 bis 3, dadurch gekennzeichnet, daß M die Bedeutung von Natriumion, $NHEt_3^+$, $NH_3(C_2H_4OH)^+$ und (Poly)siloxanen, die mindestens eine Einheit, ausgewählt aus der Gruppe bestehend aus $[NH_3(CH_2)_3SiMeO]^+$ und $[NH_3(CH_2)_2NH_2(CH_2)_3SiMeO]^{2+}$ enthalten, wobei Me gleich Methylrest und Et gleich Ethylrest bedeutet.

5. Verfahren nach einem oder mehreren der Ansprüche 1 bis 4, dadurch gekennzeichnet, daß als Organosiliciumverbindungen solche eingesetzt werden, die durch Umsetzung von Organosiliciumverbindungen aus Einheiten der Formel

$$R^4{}_d(R^5O)_eR^6{}_fSiO_{\frac{4-d-e-f}{2}} \qquad (V),$$

wobei

R⁴ gleich oder verschieden sein kann und einen einwertigen organischen Rest bedeutet,

$R^5$ gleich oder verschieden sein kann und Wasserstoffatom oder einen einwertigen organischen Rest bedeutet,

$R^6$ gleich oder verschieden sein kann und einen Rest -Q`X bedeutet mit Q' gleich zweiwertigem Kohlenwasserstoffrest und X gleich Halogenatom,

d 0, 1, 2 oder 3 ist,

e 0, 1, 2 oder 3 ist und

f 0, 1, 2 oder 3 ist,

mit der Maßgabe, daß die Organosiliciumverbindung pro Molekül mindestens einen Rest $R^6$ aufweist und die Summe aus d, e und f kleiner oder gleich 4 ist,
mit Sulfit in Anwesenheit von Wasser hergestellt werden.

6. Verfahren nach einem oder mehreren der Ansprüche 1 bis 5, dadurch gekennzeichnet, daß die Organosiliciumverbindungen in Form wäßriger Dispersionen eingesetzt werden.

7. Verfahren nach Anspruch 6, dadurch gekennzeichnet, daß die wäßrigen Dispersionen Organosiliciumverbindung mit mindestens einer Sulfonatgruppe aus Einheiten der Formel (I) in Mengen von 5 bis 60 Gewichtsprozent, bezogen auf das Gesamtgewicht der Dispersion, enthalten.

8. Verfahren nach einem oder mehreren der Ansprüche 1 bis 7, dadurch gekennzeichnet, daß es sich bei den organischen Fasern um Wolle, Baumwolle, Polyester, Polyamid, Polyacrylnitril sowie deren Mischungen handelt.

9. Verfahren nach einem oder mehreren der Ansprüche 1 bis 8, dadurch gekennzeichnet, daß Organosiliciumverbindung mit mindestens einer Sulfonatgruppe aus Einheiten der Formel (I) in Mengen von 0,1 bis 5 Gewichtsprozent, bezogen auf das Gesamtgewicht an zu imprägnierender organischer Faser, aufgetragen wird.

10. Verfahren nach einem oder mehreren der Ansprüche 1 bis 9, dadurch gekennzeichnet, daß Organosiliciumverbindung mit mindestens einer Sulfonatgruppe aus Einheiten der Formel (I) in Mengen von 0,3 bis 1,5 Gewichtsprozent, bezogen auf das Gesamtgewicht an zu imprägnierender organischer Faser, aufgetragen wird.

## Claims

1. Method for impregnating organic fibres with organosilicon compounds composed of units of the general formula

$$R_a(R^1O)_bR^2_cSiO_{\frac{4-a-b-c}{2}} \qquad (I)$$

in which

- the Rs can be identical or different and denote a monovalent organic radical,
- the $R^1$s can be identical or different and denote a hydrogen atom or a monovalent organic radical,
- the $R^2$s can be identical or different and denote a radical $-QSO_3M_v$, where Q is a divalent hydrocarbon radical, M is a cation and v is the reciprocal value of the charge on M,
- a is 0, 1, 2 or 3,
- b is 0, 1, 2 or 3 and
- c is 0, 1, 2 or 3,

with the proviso that the organosilicon compound has at least one radical $R^2$ per molecule and the sum of a, b and c is less than or equal to 3.

**2.** Method according to Claim 1, characterized in that the organosilicon compounds composed of units of the formula (I) used are those selected from the group comprising organopolysiloxanes of the formula

$$R^2-[\underset{R}{\overset{R}{Si}}O]_m-\underset{R}{\overset{R}{Si}}-R^2 \qquad (II)$$

in which

- the Rs can be identical or different and denote a monovalent organic radical,
- the $R^2$s can be identical or different and denote a radical $-QSO_3M_v$, where Q is a divalent hydrocarbon radical, M is a cation and v is the reciprocal value of the charge on M, and
- m is an integer from 20 to 500,

organopolysiloxanes of the formula

$$(R^1O)_pR_{3-p}Si\ [O\underset{R}{\overset{R}{Si}}]_n\ [O\underset{R^2}{\overset{R}{Si}}]_o\ SiR_{3-p}(OR^1)_p \qquad (III)$$

in which

- the Rs can be identical or different and denote a monovalent organic radical,
- the $R^1$s can be identical or different and denote a hydrogen atom or a monovalent organic radical,
- the $R^2$s can be identical or different and denote a radical $-QSO_3M_v$, where Q is a divalent hydrocarbon radical, M is a cation and v is the reciprocal value of the charge on M,
- n is an integer from 20 to 1000,
- o is an integer from 1 to 40 and
- p is 0 or 1,

and also organopolysiloxanes of the formula (II) or (III) in which all or some of the $[R_2SiO]$ units have been replaced by $[RSiO_{3/2}]$-, $[R(R^1O)SiO]$-, $[(R^1O)_2SiO]$-, $[(R^1O)SiO_{3/2}]$- and/or $[SiO_{4/2}]$ units or, respectively, all or some of the $[RR^2SiO]$ units have been replaced by $[(R^1O)R^2SiO]$- and/or $[R^2SiO_{3/2}]$ units, R, $R^1$ and $R^2$ having the meaning indicated above.

**3.** Method according to Claim 1 or 2, characterized in that Q denotes a n-propylene radical.

4. Method according to one or more of Claims 1 to 3, characterized in that M [lacuna] the meaning of a sodium ion, $NHEt_3^+$, $NH_3(C_2H_4OH)^+$ and (poly)siloxanes, which comprise at least one unit selected from the group comprising $[NH_3(CH_2)_3SiMeO]^+$ and $[NH_3(CH_2)_2NH_2(CH_2)_3SiMeO]^{2+}$, Me denoting a methyl radical and Et an ethyl radical.

5. Method according to one or more of Claims 1 to 4, characterized in that the organosilicon compounds used are those which are prepared by reaction of organosilicon compounds composed of units of the formula

$$R^4_d(R^5O)_eR^6_fSiO_{\frac{4-d-e-f}{2}} \qquad (V)$$

in which
the $R^4$s can be identical or different and denote a monovalent organic radical,
the $R^5$s can be identical or different and denote a hydrogen atom or a monovalent organic radical,
the $R^6$s can be identical or different and denote a radical -Q`X, where Q' is a divalent hydrocarbon radical and X is a halogen atom,
d is 0, 1, 2 or 3,
e is 0, 1, 2 or 3 and
f is 0, 1, 2 or 3,
with the proviso that the organosilicon compound has at least one radical $R^6$ per molecule and the sum of d, e and f is less than or equal to 4,
with sulphite in the presence of water.

6. Method according to one or more of Claims 1 to 5, characterized in that the organosilicon compounds are used in the form of aqueous dispersions.

7. Method according to Claim 6, characterized in that the aqueous dispersions comprise an organosilicon compound containing at least one sulphonate group and composed of units of the formula (I) in amounts of 5 to 60 per cent by weight, with respect to the total weight of the dispersion.

8. Method according to one or more of Claims 1 to 7, characterized in that the organic fibres are wool, cotton, polyester, polyamide, polyacrylonitrile and mixtures thereof.

9. Method according to one or more of Claims 1 to 8, characterized in that organosilicon compound containing at least one sulphonate group and composed of units of the formula (I) is applied in amounts of from 0.1 to 5 per cent by weight, with respect to the total weight of organic fibre to be impregnated.

10. Method according to one or more of Claims 1 to 9, characterized in that organosilicon compound containing at least one sulphonate group and composed of units of the formula (I) is applied in amounts of from 0.3 to 1.5 per cent by weight, with respect to the total weight of organic fibre to be impregnated.

**Revendications**

1. Procédé pour imprégner des fibres organiques avec des composés organiques du silicium, constitués de motifs de formule générale

$$R_a(R^1O)_bR^2_cSiO_{(4-a-b-c)/2} \qquad (I)$$

dans laquelle
les radicaux R peuvent être identiques ou différents et représentent chacun un résidu organique monovalent,
les radicaux $R^1$ peuvent être identiques ou différents et représentent chacun un atome d'hydrogène

ou un résidu organique monovalent,

les radicaux $R^2$ peuvent être identiques ou différents et représentent chacun un résidu $-QSO_3M_v$, Q étant un radical hydrocarboné divalent, M étant un cation et v étant l'inverse de la charge de M,

a vaut 0, 1, 2 ou 3

b vaut 0, 1, 2 ou 3 , et

c vaut 0, 1, 2 ou 3,

du moment que le composé organique du silicium comporte par molécule au moins un résidu $R^2$, et que la somme de a, de b et de c est inférieure ou égale à 3.

**2.** Procédé selon la revendication 1, caractérisé en ce qu'on utilise comme composés organiques du silicium constitués de motifs de formule (I) ceux du groupe comprenant :

les (poly)organosiloxanes de formule

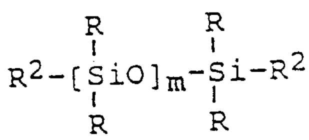

(II),

dans laquelle

les radicaux R peuvent être identiques ou différents et représentent chacun un radical organique monovalent,

les radicaux $R^2$ peuvent être identiques ou différents et représentent chacun un radical $-QSO_3M_v$, où Q est un radical hydrocarboné divalent, M est un cation et v est l'inverse de la charge de M, et m est un nombre entier de 20 à 500,

les (poly)organosiloxanes de formule

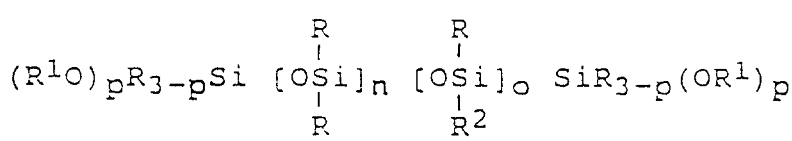

(III),

dans laquelle

les radicaux R peuvent être identiques ou différents et représentent chacun un résidu organique monovalent,

les radicaux $R^1$ peuvent être identiques ou différents et représentent chacun un atome d'hydrogène ou un résidu organique monovalent,

les radicaux $R^2$ peuvent être identiques ou différents et représentent chacun un résidu $-QSO_3M_v$, Q étant un radical hydrocarboné divalent, M étant un cation et v étant l'inverse de la charge de M,

n est nombre entier de 20 à 1000,

o est nombre entier de 1 à 40, et

p vaut 0 ou 1,

ainsi que les polyorganisiloxanes ayant les formules (II) ou (III), dans lesquelles les motifs $[R^2SiO]$ sont, en totalité ou en partie, remplacés par des motifs $[RSiO_{3/2}]$-, $[R(R^1O)SiO]$-, $[(R^1O)2SiO]$-, $[(R^1O)$-$SiO_{3/2}]$-et/ou $[SiO_{4/2}]$-, ou encore les motifs $[RR^2SiO]$- sont, en totalité ou en partie, remplacés par des motifs $[(R^1O)R^2SiO]$- et/ou $[R^2SiO_{3/2}]$, où R, $R^1$ et $R^2$ ont les significations données ci-dessus.

**3.** Procédé selon la revendication 1 ou 2, caractérisé en ce que Q est le radical n-propylène.

**4.** Procédé selon l'une ou plusieurs des revendications 1 à 3, caractérisé en ce que M est l'ion sodium, $NHEt_3{}^+$, $NH_3(C_2H_4OH)^+$ ou est un (poly)siloxane, contenant au moins un motif choisi parmi l'ensemble $[NH_3(CH_2)_3\text{-}SiMeO]^+$ et $[NH_3(CH_2)_2NH_2(CH_2)_3SiMeO]^{2+}$, Me étant le radical méthyle et Et étant le radical éthyle.

**5.** Procédé selon l'une ou plusieurs des revendications 1 à 4, caractérisé en ce qu'on utilise comme composés organiques du silicium ceux que l'on a préparé avec un sulfite, en présence d'eau, par

réaction de composés organiques du silicium à partir de motifs de formule
$R^4{}_d(R^5O)_eR^6{}_fSiO_{(4-d-e-f)/2}$ (V)

dans laquelle
les radicaux $R^4$ peuvent être identiques ou différents et sont chacun un radical organique monovalent,
les radicaux $R^5$ peuvent être identiques ou différents et représentent chacun un atome d'hydrogène ou un radical organique monovalent,
les radicaux $R^6$ peuvent être identiques ou différents et représentent chacun un radical -Q'X, Q' étant identique à Q, et X étant un atome d'halogène,
d vaut 0, 1, 2 ou 3,
e vaut 0, 1, 2, ou 3, et
f vaut 0, 1, 2 ou 3,
du moment que le composé organique du silicium comporte par molécule au moins un radical $R^6$, et que la somme de d, de e, et de f est inférieure ou égale à 4.

**6.** Procédé selon l'une ou plusieurs des revendications 1 à 5, caractérisé en ce que les composés organiques du silicium sont utilisés sous forme de dispersions aqueuses.

**7.** Procédé selon la revendication 6, caractérisé en ce que les dispersions aqueuses contiennent un composé organique du silicium comportant au moins un groupe sulfonate constitué de motifs de formule (I) en des quantités de 5 à 60 % en poids par rapport au poids total de la dispersion.

**8.** Procédé selon l'une ou plusieurs des revendications 1 à 7, caractérisé en ce que, pour ce qui est des fibres organiques, il s'agit du coton, de la laine, du polyester, de polyamide, du polyacrylonitrile ou de leurs mélanges.

**9.** Procédé selon l'une ou plusieurs des revendications 1 à 8, caractérisé en ce que le composé organique du silicium comportant au moins un groupe sulfonate et constitué de motifs de formule (I) est appliqué en des quantités de 0,1 à 5 % en poids par rapport au poids total des fibres organiques à imprégner.

**10.** Procédé selon l'une ou plusieurs des revendications 1 à 9, caractérisé en ce que le composé organique du silicium comportant au moins un groupe sulfonate et constitué de motifs de formule (I) est appliqué en des quantités de 0,3 à 1,5 % en poids par rapport au poids total des fibres organiques à imprégner.